# EUROPEAN PATENT APPLICATION

(11) **EP 2 582 144 A2**
(43) Date of publication of application: **17.04.2013**
(21) Application number: 11792677.4
(22) Date of filing: 08.06.2011
(51) Int. Cl.: H04N 13/02, H04N 13/04

(54) **IMAGE PROCESSING METHOD AND IMAGE DISPLAY DEVICE ACCORDING TO THE METHOD**

(30) Priority: 08.06.2010 KR 20100053786
(71) Applicant: LG Electronics Inc., Yeongdeungpo-gu Seoul 150-721 (KR)
(72) Inventor: SONG, Junyong, Pyeongtaek-si Gyeonggi-do 451-862 (KR); HAN, Mikyung, Pyeongtaek-si Gyeonggi-do 451-862 (KR); LIM, Keunhwa, Pyeongtaek-si Gyeonggi-do 451-862 (KR); SON, Min, Pyeongtaek-si Gyeonggi-do 451-862 (KR)
(74) Representative: Cabinet Plasseraud
(86) International application number: PCT/KR2011/004198
(87) International publication number: WO 2011/155766

(57) **Abstract**

The present invention relates to an image processing method and an image display device. A signal input unit receives image data. A signal processing unit scales image data received by the signal input unit to first image data and second image data, wherein the first image data and the second image data are scaled to be different from each other.

## Description

### Technical Field

The present invention relates to an image processing method and an image display device according to the method, and more particularly, to an image processing method and an image display device, in which received images are processed to be displayed.

### Background Art

The current broadcasting tendency has been rapidly switched from analog broadcasting to digital broadcasting. In accordance with this tendency, the amount of contents for digital broadcasting has been rapidly increased. Also, in addition to contents displaying a two dimensional (2D) image signal as a two dimensional image, contents displaying a three dimensional (3D) image signal as a two dimensional image have been produced and projected as contents for digital broadcasting. Hereinafter, the contents displaying a three dimensional image signal as a three dimensional image will be referred to as three dimensional contents.

In accordance with the production and project of the three dimensional contents, a display device that allows a user to watch three dimensional contents has been provided. The production and project of the three dimensional contents has been increased continuously.

In the three dimensional contents, reality may be regarded as the most important picture quality factor. In other words, it is very important in the three dimensional contents that a stereoscopic image is displayed to be close to a real stereoscopic object and shape.

In this respect, a method for increasing reality or stereoscopic effect of a three dimensional image and an image display device based on the method will be required.

### Disclosure

### Technical Problem

Accordingly, an object of the present invention devised to solve the conventional problems is to provide an image processing method and an image display device according to the method, in which a user's concentration and interest in an image which is displayed may be increased.

Another object of the present invention is to provide an image processing method and an image display device according to the method, in which picture quality of a three dimensional image which is displayed may be improved.

Other object of the present invention is to provide an image processing method and an image display device according to the method, in which reality and stereoscopic effect of a three dimensional image may be increased.

### Technical Solution

According to one embodiment of the present invention, an image processing method comprises the steps of receiving image data; scaling the received image data to first image data; and scaling the received image data to second image data, wherein the first image data and the second image data are scaled to be different from each other. In this case, the received image data may include either 2D image data or 3D image data.

Also, the first image data may be obtained by differently scaling divided intervals of the received image data, and the second image data may be obtained by equally scaling divided intervals of the received image data. In this case, the divided intervals may be divided in either a vertical direction or a horizontal direction.

Also, either the first image data or the second image data may be scaled such that a scaling size is increased or reduced towards at least one of a left and right direction and an up and down direction from the center of the received image data. In this case, increase or reduction of the scaling size for the first image data may be different from increase or reduction of the scaling size for the second image data.

Also, either the first image data or the second image data may be scaled such that a scaling size is increased or reduced towards the center from at least one of a left side, a right side, an upper side, and a lower side of the received image data. In this case, increase or reduction of the scaling size for the first image data may be different from increase or reduction of the scaling size for the second image data.

Also, the first image data and the second image data may be have the same size, the same resolution or the same aspect ratio.

Also, the received image data are 3D image data, which include left eye image data and right eye image data, the first image data may be scaled from one of the left eye image data and the right eye image data, and the second image data may be scaled from the other one.

The image processing method may further comprise the step of sampling the first image data and the second image data in accordance with a 3D image frame format.

Also, the image processing method may further comprise the steps of sensing a user's manipulation requesting setting of a scaling mode, controlling a GUI for setting a scaling mode, in response to the sensed user's manipulation, so that the GUI may be displayed, and receiving a scaling parameter through the GUI, wherein the received image data may be scaled to the first image data and the second image data in accordance with the input scaling parameter. In this case, the GUI may include an area displaying the first image data and the second image data, which are scaled in accordance with the scaling parameter.

An image display device according to one embodiment of the present invention comprises a signal input unit receiving image data; and a signal processor scaling the received image data to first image data and second image data, wherein the first image data and the second image data are scaled to be different from each other.

The signal processor may include a decoder decoding the receive image data; a first scaler scaling the decoded image data to the first image data; a second scaler scaling the decoded image data to the second image data; and a formatter sampling the first image data and the second image data in accordance with a 3D image frame format.

The image display device may further comprise an interface unit receiving a user's manipulation requesting setting of a scaling mode, wherein the controller controls a GUI for setting a scaling mode, in response to the user's manipulation, so that the GUI may be displayed, and controls the received image data to be scaled to the first image data and the second image data in accordance with a scaling parameter input through the GUI.

Also, the signal processor may scale the received image data or stored image data to the first image data and the second image data in accordance with the scaling parameter, and the GUI may include an area displaying the first image data and the second image data, which are scaled.

Also, the signal input unit may include at least one of a tuner receiving RF signal, which includes the image data, a wire network interface unit receiving IP packets, which include the image data, a RF signal input unit receiving the IP packets, and an audio/video (A/V) input unit receiving the image data from an external unit.

An image processing method according to one embodiment of the present invention comprises the steps of receiving image data; scaling the received image data to first image data; scaling the received image data to second image data; and displaying the first image data and the second image data, which are scaled, wherein the first image data and the second image data are scaled to be different from each other.

Also, the displaying step may include displaying the first image data and the second image data in accordance with a 3D display mode.

Also, the image processing method may further comprise the steps of sensing a user's manipulation requesting setting of a scaling mode; displaying a GUI for setting a scaling mode, in response to the sensed user's manipulation; and receiving a scaling parameter through the displayed GUI, wherein the received image data are scaled to the first image data and the second image data in accordance with the received parameter.

### Advantageous Effects

In the image processing method and the image display device based on the method according to one embodiment of the present invention, since images are displayed as if the images are displayed on a curved type screen, the user's concentration and interest in the displayed images may be increased.

Also, since a left eye image and a right eye image of a three dimensional image are scaled differently from each other, reality and stereoscopic effect of the three dimensional image may be increased, whereby picture quality of the three dimensional image may be improved.

### Brief Description of the Drawings

FIG. 1 is a diagram illustrating single video stream formats of transport formats of a three dimensional image;

FIG. 2 is a diagram illustrating multi video stream formats of transport formats of a three dimensional image;

FIG. 3 is a block diagram illustrating an image display device according to one embodiment of the present invention;

FIG. 4 is a flow chart illustrating an image processing method according to one embodiment of the present invention;

FIG. 5 is a diagram illustrating difference in distance caused by binocular parallax of a three dimensional image;

FIG. 6 is a diagram illustrating an operation for controlling a divided interval at steps S110 and S120 of FIG. 4;

FIG. 7 is another diagram illustrating an operation for controlling a divided interval at steps S110 and S120 of FIG. 4;

FIG. 8 is a diagram illustrating scaling in a horizontal direction;

FIG. 9 is another diagram illustrating scaling in a horizontal direction;

FIG. 10 is a diagram illustrating scaling in a vertical direction;

FIG. 11 is another diagram illustrating scaling in a vertical direction;

FIG. 12 is a diagram illustrating a screen where contents are displayed;

FIG. 13 to FIG. 16 are diagrams illustrating that a graphical user interface (GUI) for setting a scaling mode is displayed; and

FIG. 17 is a flow chart illustrating an image processing method according to another embodiment of the present invention.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts. The embodiments of the present invention shown in the accompanying drawings and described by the drawings are only exemplary, and technical spirits of the present invention and its main operation are not limited by such embodiments.

Although the terminologies used in the present invention are selected from generally known and used terminologies considering their functions in the present invention, the terminologies may be modified depending on intention of a person skilled in the art, practices, or the advent of new technology. Also, in special case, the terminologies mentioned in the description of the present invention may be selected by the applicant at his or her discretion, the detailed meanings of which are described in relevant parts of the description herein. Accordingly, the terminologies used herein should be understood not simply by the actual terminologies used but by the meaning lying within and the description disclosed herein.

The present invention is intended to provide an image processing method and an image display device according to the method, in which concentration on an image may be increased when the image is displayed.

The present invention is intend to provide an image processing method and an image display device according to the method, in which reality may be increased when a three dimensional ('3D') image is displayed.

Hereinafter, for description of technical spirits of the present invention in this specification, an image display device that may process 3D image displays a left eye image and a right eye image in due order in accordance with an active mode.

Hereinafter, 3D image will be described in brief.

Examples of the 3D image include a stereo (or stereoscopic) image that considers two view points and a multi-view image that considers three view points or more. The stereo image means a pair of left and right eye images acquired by taking a single subject using a left camera and a right camera, which are spaced apart from each other at a given distance. The multi-view image means three or more eye images acquired by taking a single subject using three or more cameras having a given distance or angle.

Examples of transport formats of the stereo image include single video stream formats and multi video stream formats.

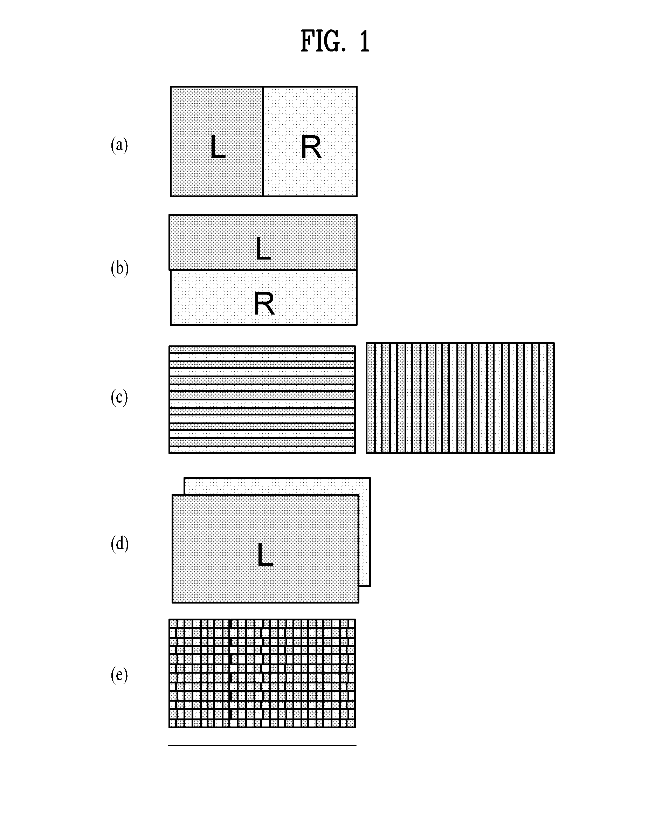

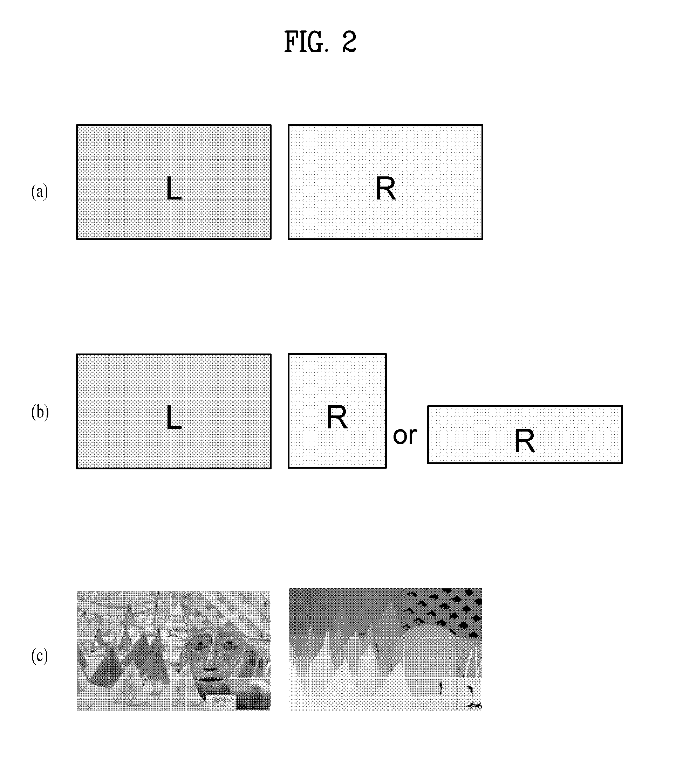

The single video stream formats and the multi video stream formats will be described in detail with reference to FIG. 1 and FIG. 2.

FIG. 1 is a diagram illustrating single video stream formats of transport formats of a three dimensional image.

Examples of the single video stream formats include a side by side format, a top/down format, an interlaced format, a frame sequential format, a checker board format, and an anaglyph format.

Referring to (a) of FIG. 1, which illustrates a side by side format, the side by side format makes one stereo image by 1/2 sub sampling a left eye image and a right eye image in a horizontal direction and arranging the sampled left eye image at the left side and the sampled right eye image at the right side.

Referring to (b) of FIG. 1, which illustrates a top/down format, the top/down format makes one stereo image by 1/2 sub sampling a left eye image and a right eye image in a vertical direction and arranging the sampled left eye image at the upper side and the sampled right eye image at the lower side.

Referring to (c) of FIG. 1, which illustrates an interlaced format, the interlaced format makes a stereo image by 1/2 sub sampling a left eye image and a right eye image in a vertical direction and alternately arranging pixels of the sampled left eye image and pixels of the sampled right eye image per line. Alternatively, the interlaced format makes a stereo image by 1/2 sub sampling a left eye image and a right eye image in a horizontal direction and alternately arranging pixels of the sampled left eye image and pixels of the sampled right eye image.

Referring to (d) of FIG. 1, which illustrates a frame sequential format, the frame sequential format makes a stereo image by alternately arranging a left eye image and a right eye image as one frame without sub sampling the left eye image and the right eye image.

Referring to (e) of FIG. 1, which illustrates a checker board format, the checker board format makes a stereo image by 1/2 sub sampling a left eye image and a right eye image in a vertical direction and alternately arranging pixels of the sampled left eye image and pixels of the sampled right eye image.

FIG. 2 is a diagram illustrating multi video stream formats of transport formats of a three dimensional image.

Examples of the multi video stream formats include a full left/right format, a full left/full right format, and a 2D video/depth format.

Referring to (a) of FIG. 2, which illustrates a full left/right format, the full left/right format transmits a left eye image and a right eye image in due order.

Referring to (b) of FIG. 2, which illustrates a full left/half right format, the full left/half right format transmits a left eye image as it is, and transmits a right eye image by 1/2 sub sampling the same in a vertical or horizontal direction.

Referring to (c) of FIG. 2, which illustrates a 2D video/depth format, the 2D video/depth format transmits one of a left eye image and a right eye image together with depth information making the other image.

The stereo image or multi view point image is compressed and encoded by MPEG or various manners and then transmitted to a receiving system. In this case, the receiving system becomes an image display device that may process and display 3D image signal.

For example, a transmitting system may compress and encode the stereo image such as the side by side format, the top/down format, the interlaced format and the checker board format in accordance with H.264/AVC manner and then may transmit the stereo image. At this time, the receiving system may obtain 3D image by performing decoding for the stereo image in an inverse manner of H.264/AVC coding manner.

Also, the transmitting system may allocate one of the left eye image or the multi view point image of the full left/half right format as a based layer image and the other image as an enhanced layer image, encode the based layer image in the same manner as that of a monoscopic image, encode the enhanced layer image for correlation information only between the based layer image and the enhanced layer image, and transmit the encoded image.

Examples of the compressed encoding modes for the based layer image may include JPEG, MEPG-1, MPEG-2, MPEG-4, and H.264/AVC. An example of the compressed encoding mode for the enhanced layer image may include H.264/MVC (multi-view video coding) mode. At this time, the stereo image is allocated as the based layer image and one enhanced layer image but the multi view point image is allocated one based layer image and a plurality of enhanced layers. In this case, the multi view point image may be identified from the based layer image and one or more enhanced layer images depending on a position or arrangement of a camera. Alternatively, the based layer image and one or more enhanced layer images may be determined without depending on a specific rule.

Generally, the 3D image depends on the principles of stereo eyesight through two eyes. A binocular parallax is an important factor that allows a user to feel stereoscopic effect, and if plane images associated with each other are viewed respectively by two eyes, a brain combines these different images together to play the original depth and reality of the 3D image. In this case, the binocular parallax means difference between two eyes, specifically difference in vision between a left eye and a right eye spaced apart from each other at about 65mm.

The 3D image display is divided into a stereoscopic mode, a volumetric mode, and a holographic mode. For example, the image display device, which may display a 3D image signal to which the stereoscopic technology is applied, is a device that allows a viewer to feel stereoscopic effect and reality by using depth information added to 2D image. An example of the image display device may include a set-top box and a digital television.

A mode for displaying a 3D image may include a glasses mode and a non-glasses mode. The glasses mode may be divided into a passive mode and an active mode.

In this case, the passive mode is to display a left eye image and a right eye image individually by using a polarizing filter. In other words, the passive mode is that a user wears colored glasses of blue and red on his/her eyes to view images. The active mode is to identify a left eye image and a right eye image from each other by using a liquid crystal shutter, specifically identify a left eye image and a right eye image from each other by timely covering a left eye and a right eye in due order. In other words, the active mode is that a user views images by wearing glasses provided with an electronic shutter synchronized with a period of a time divided screen which is periodically repeated. The active mode may be referred to as a time split type mode or a shuttered glass mode. Hereinafter, glasses driven by the shuttered glass mode will be referred to as shutter glasses.

Examples of the non-glasses mode include a lenticular mode and a parallax barrier mode. In the lenticular mode, a lenticular lens plate provided with a cylindrical lens array vertically arranged is arranged at the front of an image panel. The parallax barrier mode is provided with a barrier layer having periodical slits on an image panel.

Hereinafter, in this specification, to describe technical spirits of the present invention more easily, the stereoscopic mode of the stereoscopic display mode will be described exemplarily, and the active mode of the stereoscopic mode will be described exemplarily. Although shuttered glasses will be described as an example of the active mode, it is to be understood that the present invention is not limited to the shuttered glasses and another example may be used as described later.

As described above, according to the active mode, if the left eye image is displayed through the image display device, a left shutter of the shuttered glasses is opened. If the right eye image is displayed through the image display device, a right shutter of the shuttered glasses is opened.

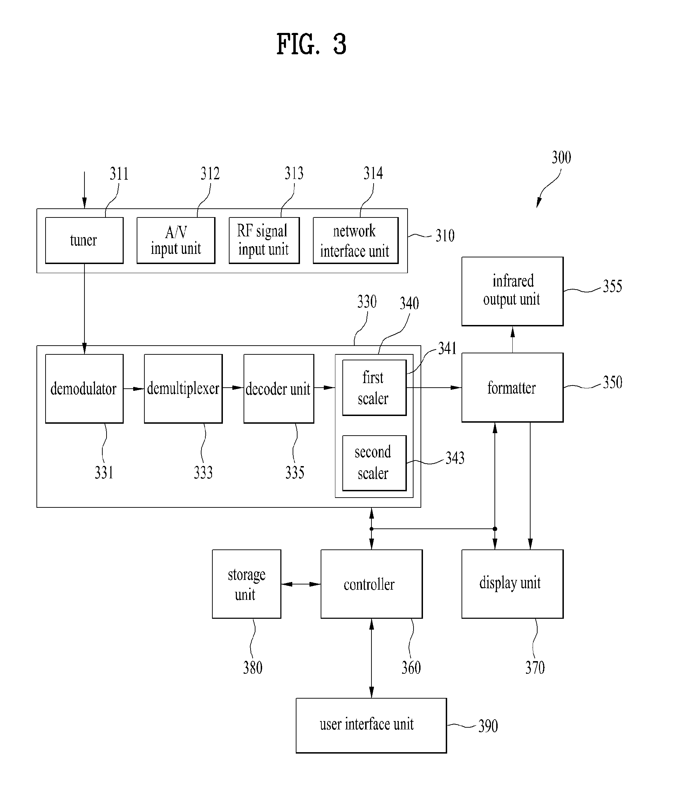

FIG. 3 is a block diagram illustrating an image display device according to one embodiment of the present invention.

Referring to FIG. 3, an image display device 300 according to the present invention includes a signal input unit 310, a signal processor 330, and a formatter 350. Also, the image display device 300 according to the present invention may further include an infrared output unit 355, a controller 360, a display unit 370, a storage unit 380, and a user interface unit 390. Examples of the image display device include a digital television and a set-top box. Also, the image display device 300 may further include shutter glasses (not shown). Moreover, the image display device may be a mobile terminal such as a cellular phone, a smart phone, a digital broadcasting terminal, a personal digital assistant (PDA), a portable multimedia player (PMP), and navigation system, or may be a personal computer such as desktop computer, laptop computer, a tablet computer and a handheld computer.

In addition, the image display device 300 may further include other elements if necessary in addition to the elements shown in FIG. 1.

Also, the signal input unit 310 may include at least one of a tuner 311, an audio/video (A/V) input unit 312, a radio signal input unit 313, and a network interface unit 314, and receives a video signal. In this case, the received video signal may include at least one of 2D image data or 3D image data. The 3D image data may be stereo image or multi view point image. Also, the 3D image data may have the formats shown and described in FIG. 1 and 2.

The tuner 311 selectively receives a broadcast signal, which includes predetermined contents transmitted in a type of a radio frequency (RF) signal, through a channel of a predetermined frequency band. In other words, the tuner 311 selectively receives a broadcast signal transmitted from a contents manufacturer such as a broadcast station. In this case, the broadcast signal may include at least one of 2D image data and 3D image data.

The A/V input unit 312 is connected with an external device, which may output audio and video signals, and receives AN signals output from the external device. In this case, the external device means various types of video or audio output device such as a digital versatile disk (DVD), a Bluray, a game player, a camcorder, and a computer (notebook computer). The A/V signal may include at least one of 2D image data and 3D image data.

The radio signal input unit 313 receives a radio signal from a wireless network through a network interface unit (not shown) provided therein. In this case, the radio signal transmitted through the wireless network may include contents transmitted from a content provider (CP) or a service provider (SP). Also, the radio signal may include audio and video signals, and may include IP packets that include the audio and video signals. In this case, the video signal may include at least one of 2D image data and 3D image data.

The network interface unit 314 receives IP packets transmitted from a wire network. The IP packets may be transmitted from an Internet network. Also, the IP packets may be transmitted from the content provider (CP) or the service provider (SP). In this case, the IP packets may include the audio and video signals. The video signal may include at least one of 2D image data and 3D image data.

The signal processor 330 may include a demodulator 331, a demultiplexer (Demux) 333, a decoder unit 335, and a scaler 340. The decoder unit 335 may include a video decoder (not shown) and an audio decoder (not shown). The signal processor 330 may further include a formatter 350.

The demodulator 331 demodulates the broadcast signal received and transmitted from the signal input unit 310.

The demultiplexer 333 demultiplexes audio data, video data and additional information from the demodulated broadcast signal or the signal output from the signal input unit 310. In this case, the additional information may be system information (SI) such as program specific information/program and system information protocol (PSI/PSIP).

The demultiplexer 333 outputs the demultiplexed audio data and video data to the decoder unit 335, and outputs the additional information to an addition information processor (not shown).

The decoder unit 335 decodes the video data output from the signal input unit 310 or the demultiplexer 333 to the original data transmitted from an image signal provider such as a broadcast station. The decoder unit 335 decodes the demultiplexed video data to the original data prior to transmission through the video decoder (not shown), and decodes the demultiplexed audio data to the original data prior to transmission through the audio decoder (not shown).

The scaler 340 scales the data processed by the decoder unit 335 to a signal of a proper size for output, through the display unit 370 or a speaker unit (not shown). In more detail, the scaler 340 receives 2D image or 3D image and scales the 2D image or the 3D image to be suitable for resolution or predetermined aspect ratio of the image display device 300. The image display device 300 is manufactured to output a video screen having predetermined resolution, for example, 720x480 format, 1024x768 format, 1280x720 format, 1280x768 format, 1280x800 format, 1920x540 format, 1920x1080 format or 4Kx2K format, per product option. Accordingly, the scaler 340 may convert resolution of 3D image, which may be input at various values, to be suitable for resolution of the corresponding image display device.

Also, the scaler 340 controls and outputs an aspect ratio of 3D image in accordance with a type of displayed contents or user setting. The aspect ratio may have a value of 16:9, 4:3, or 3:2. The scaler 340 may control the aspect ratio in such a manner that a ratio of a horizontal screen length and a vertical screen length becomes a specific ratio.

The scaler 340 may include a first scaler 341 and a second scaler 343. The first scaler 341 scales any one of a left eye image and a right eye image of a main screen or 3D image. The second scaler 343 scales any one of a left eye image and a right eye image of a sub screen or 3D image.

Also, the scaler 340 of the image display device 300 according to one embodiment of the present invention may divide one frame signal constituting one screen in a 3D image signal, which will be displayed, into a plurality of parts and output the signal by controlling the divided width linearly or non-linearly.

For example, the first scaler 341 may divide an image frame included in any one (for example, left eye image) of a left eye image and a right eye image of a 3D image signal into a plurality parts and output the same by controlling the divided interval non-linearly. Hereinafter, the image frame included in the left eye image will be referred to as a left eye image frame, and the image frame included in the right eye image will be referred to as a right eye image frame.

In other words, if the divided interval of any one of the left eye image frame and the right eye image frame in any one of the first scaler 341 and the second scaler 343 is controlled non-linearly and a full screen size is controlled, the other one of the first scaler 341 and the second scaler 343 outputs the other one of the left eye image frame and the right eye image frame by controlling the full screen size only without controlling the width of the divided interval or by controlling the divided interval linearly.

Also, the first scaler 341 and the second scaler 343 may scale the same image differently. The first scaler 341 scales the image decoded by the decoder unit 335 to a first image, and the second scaler 343 scales the same image to a second image differently from the first scaler 341.

According to one embodiment, the sacler 340 may be configured by one scaler. In this case, the scaler 340 may generate first and second images by scaling the image decoded by the decoder unit 335 two times. In this case, the scaler 340 may generate first and second images by scaling the image differently. In other words, the first image and the second image may be scaled from the same image differently from each other. Also, the scaler 340 may scale the left eye image frame and the right eye image frame in due order. In this case, the left eye image frame and the right eye image frame may be scaled differently from each other.

Also, the sacler 340 may apply a picture quality setting value (for example, color, sharpness, etc.), which is used to display the 3D image, to the left eye image and the right eye image according to the 3D image signal, respectively. In this case, the picture quality setting value may be controlled or set specifically by the controller 360, and the scaler 340 outputs a predetermined picture quality setting value by applying the picture quality setting value to the left eye image and the right eye image according to the 3D image signal, which will be displayed, respectively, under the control of the controller 360. Also, the operation for applying the predetermined picture quality setting value to the left eye image and the right eye image according to the 3D image signal, which will be displayed, respectively, may be performed by the formatter 350 not the scaler 340.

The formatter 350 converts the video and audio signals output from the scaler 340 to be suitable for an output format of the display unit 350. In this case, the formatter 350 passes the received signal without conversion if 2D contents are displayed. And, if 3D contents are displayed, the formatter 350 may act as a 3D formatter that processes the image output from the scaler 340 in a 3D format to be suitable for an output frequency of the display unit 370 and a format of the 3D contents under the control of the controller 360. If the scaler 340 scales 2D image to the first image and the second image, the formatter 350 may act as a 3D formatter that processes the first image and the second image in a 3D format to be suitable for an output frequency of the display unit 370 and a format of the 3D contents under the control of the controller 360.

Also, the formatter 350 outputs the image signal converted to implement 3D image to the display unit 370, and generates a vertical synchronization signal Vsync for the output 3D image signal and outputs the generated signal to the infrared output unit 355. In this case, the vertical synchronization signal Vsync is to synchronize a display timing of the left eye image or the right eye image according to the 3D image signal with a switching timing of a left eye lens or a right eye lens of shutter glasses (not shown).

According to one embodiment, the formatter 350 may function as the scaler 340. In other words, the formatter 350 may directly scale the image output from the decoder unit 335.

The infrared output unit 355 receives the vertical synchronization signal output from the formatter 350 and transmits the received signal to the shutter glasses (not shown). Then, the shutter glasses controls a shutter open period of a left eye shutter liquid crystal panel (left eye lens) and a right eye shutter liquid crystal panel (right eye lens) in accordance with the received vertical synchronization signal. In more detail, when the image display device 300 displays the left eye image, the left eye shutter liquid crystal panel passes light while the right eye shutter liquid crystal panel shields light. As a result, the left eye image is transferred to a left eye only of a user of the glasses. When the image display device 300 displays the right eye image, the left eye shutter liquid crystal panel shields light while the right eye shutter liquid crystal panel passes light. As a result, the right eye image is transferred to a right eye only of a user of the glasses.

The controller 360 controls the overall operation of the image display device 300. The controller 360 may control the scaler 340 to scale the image frame included in the 2D image signal to a first image frame and a second image frame, respectively. In this case, the first image frame and the second image frame may be scaled differently from each other. Also, the controller 360 may control the scaler 340 to scale the left eye image frame and the right eye image frame included in the 3D image signal differently from each other.

In more detail, the controller 360 controls the scaler 340 to non-linearly control and output the divided interval of one of the left eye image frame and the right eye image frame included in the received 3D image signal. The controller 360 controls the scaler 340 to output the other one of the left eye image frame and the right eye image frame included in the received 3D image signal without controlling the divided interval, or controls the scaler 340 to linearly control and output the divided interval of the other one of the left eye image frame and the right eye image frame included in the received 3D image signal.

The display unit 370 displays the 2D image signal or the 3D image signal transmitted through the formatter 350 as a stereoscopic image. Also, the display unit 370 may display the 2D image signal transmitted by bypassing the formatter 350 or output from the scaler 340 without passing the formatter 340.

The storage unit 380 may store various kinds of information required for the display operation.

The user interface unit 390 may receive the user's manipulation. The user interface unit 390 may include at least one of a touch screen, a touch pad, a remote controller receiver, a camera unit, an audio receiver, and a button unit that includes a physical button. In this case, the user's manipulation may include selection of a physical button of a remote controller or the image display device, action of a predetermined gesture or selection of a soft button on a touch screen display screen, action of a predetermined gesture recognized from an image taken by an image pickup device, and action of a predetermined utterance recognized by voice recognition.

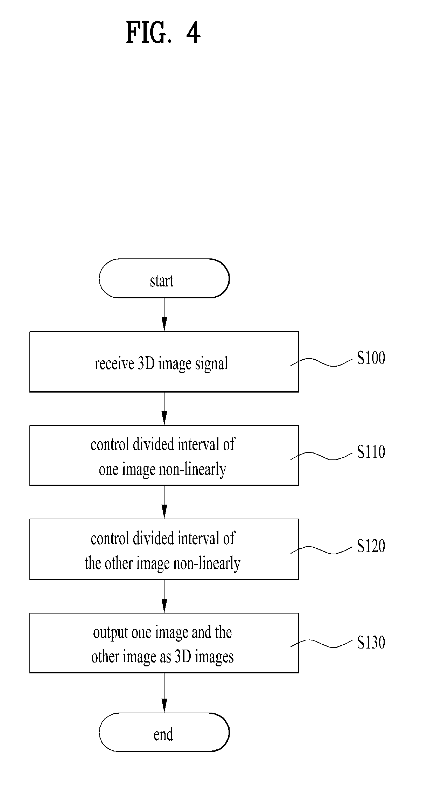

Technical spirits of the image display device 300 according to one embodiment of the present invention are the same as those of an image processing method which will be described with reference to FIG. 4 to FIG. 7. Accordingly, a detailed operation of the image display device 300 will be described in detail.

FIG. 4 is a flow chart illustrating an image processing method according to one embodiment of the present invention.

Referring to FIG. 4, in the image processing method according to one embodiment of the present invention, a 3D image signal, which includes a left eye image and a right eye image, is received (S100). The operation of the step S100 may be performed by the signal input unit 310, and the received 3D image signal may have a signal type shown and described in FIG. 1 and FIG. 2.

Also, the image processing method according to one embodiment of the present invention may further include the steps of demodulating and demultiplexing the 3D image signal received at the step S100 and decoding the demultiplexed audio and video signal (not shown).

Any one image frame (hereinafter, referred to as 'one image') of the left eye image and the right eye image included in the 3D image signal is divided into a plurality of parts, and in this case, the divided interval is controlled non-linearly (S110). In other words, the divided interval of one image is controlled differently. Also, the step S110 may include the steps of equally dividing one image of the left eye image and the right eye image included in the 3D image signal into a plurality of images and non-linearly controlling the divided interval (width of divided images) of each of the divided images.

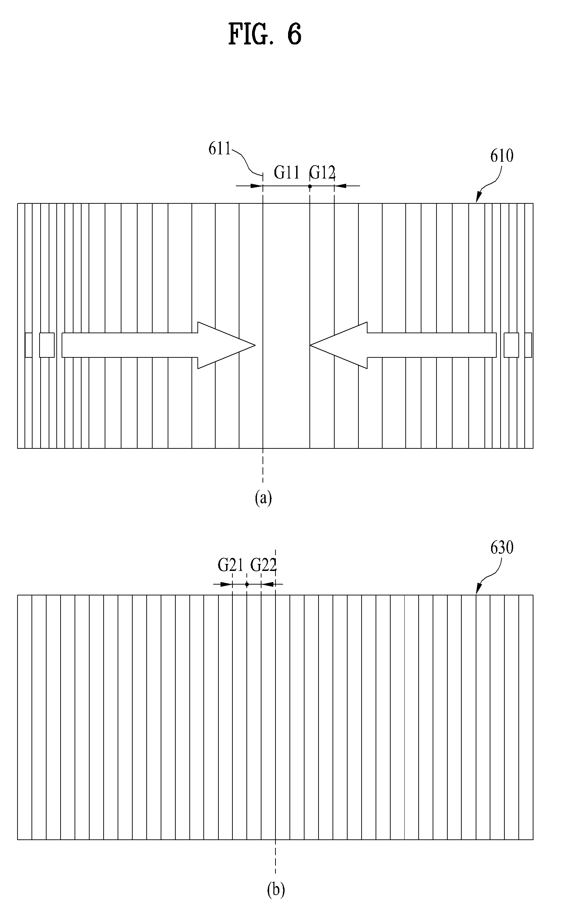

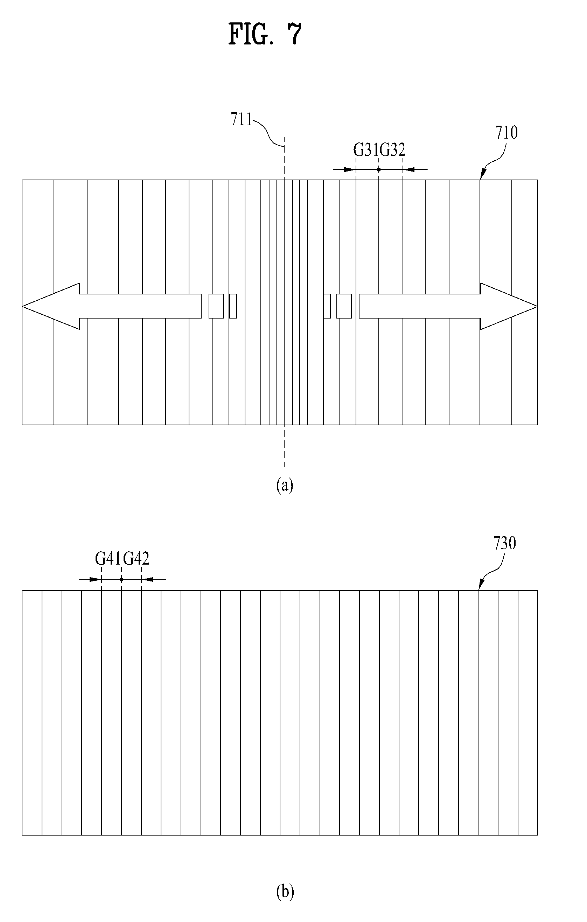

In a plurality of divided images when one image is divided into the plurality of divided images in a vertical direction, the step S110 may include non-linearly controlling the vertical width interval. Also, in a plurality of divided images when one image is divided into the plurality of divided images in a horizontal direction, the step S110 may include non-linearly controlling the horizontal width interval. Hereinafter, in FIG. 6 and FIG. 7, one image is divided into a plurality of images in a vertical direction.

Also, the image processing method further include the step (S120) of dividing the other one of the left eye image and the right eye image included in the 3D image signal into a plurality of images and linearly controlling the divided interval. In other words, the divided interval of the other image is controlled equally.

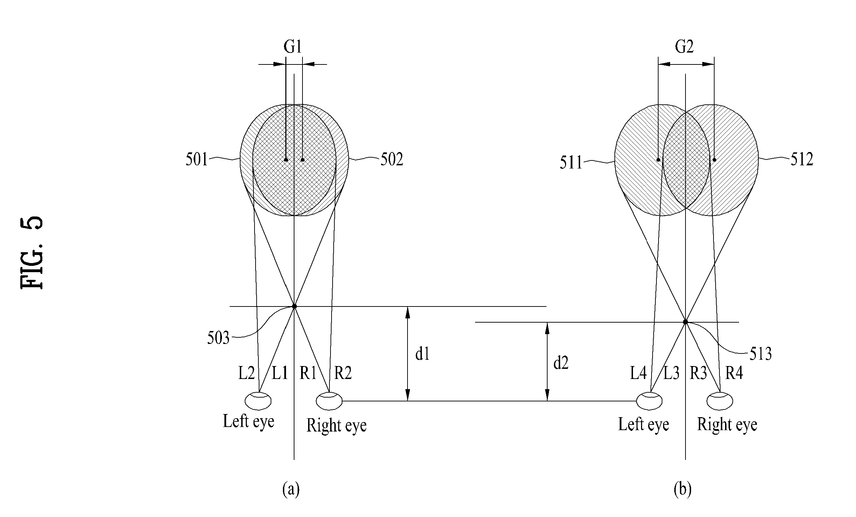

In the present invention, in order to increase reality of the 3D image, the divided image for one image is controlled non-linearly at the step S110. Non-linear control of the divided interval of one image at the step S110 and reality increase will be described in more detail with reference to FIG. 5.

FIG. 5 is a diagram illustrating difference in distance caused by binocular parallax of a 3D image.

Referring to FIG. 5, (a) of FIG. 5 illustrates a position 503 of an image formed by combination of a right eye image 501 and a left eye image 502 if an interval between the right eye image 501 and the left eye image 502 is narrow. Also, (b) of FIG. 5 illustrates a position 513 of an image formed by combination of a right eye image 511 and a left eye image 512 if an interval between the right eye image 511 and the left eye image 512 is wide.

In other words, (a) of FIG. 5 and (b) of FIG. 5 illustrate perspective levels that images are formed at different positions depending on the interval between the left eye image and the right eye image displayed by the image display device 300.

Referring to (a) of FIG. 5, when extension lines R1 and R2 viewing one side and the other side of the right eye image 501 through the right eye are drawn and extension lines L1 and L2 viewing one side and the other side of the left eye image 502 through the left eye are drawn, the image is formed at the position 503 where the extension line R1 of the right eye image crosses the extension line L1 of the left eye image at a given distance d1 from the right eye and the left eye. Accordingly, the user feels the distance of d1 in viewing the 3D image through the image display device 300.

Referring to (b) of FIG. 5, based on the description in (a) of FIG. 5, the image is formed at the position 513 where the extension line R3 of the right eye image crosses the extension line L3 of the left eye image at a given distance d2 from the right eye and the left eye.

In this case, comparing the distance d1 in (a) of FIG. 5 with the distance d2 in (b) of FIG. 5, indicating the distance from the left eye and the right eye to the positions 503 and 513 where the images are formed, the distance d1 from the left eye or the right eye is longer than the distance d2 from the left eye or the right eye. In other words, the image in (a) of FIG. 5 is formed at the distance farther away from the left eye and the right eye as compared with the image in (b) of FIG. 5. In other words, if the difference G1 in a center distance between the left eye image 501 and the right eye image 502 is narrow, a sense of distance is increased. Accordingly, the user recognizes the image as a screen which is far away (or object displayed on the screen) if the difference G1 in a center distance is narrow.

In other words, perspective is varied depending on the displayed interval (G1 or G2) of the right eye image and the left eye image. In this case, the displayed interval (G1 or G2) of the right eye image and the left eye image may be referred to as parallax (that is, binocular parallax) of two cameras based on the principle of the stereoscopic mode. In other words, perspective is varied depending on the binocular parallax of the displayed interval (G1 or G2) of the right eye image and the left eye image.

In the present invention, in the left eye image and the right eye image displayed at the same period, in order to set the binocular parallax in predetermined divided areas (divided images) on the same screen differently, the divided interval is non-linearly controlled for one image but the divided interval is not controlled for the other image. Accordingly, the binocular parallax may differently be provided to each divided area of the left eye image and the right eye image displayed at the same period and recognized by the user as one screen. As a result, distance (perspective or depth) may differently be provided to the left eye image and the right eye image displayed at the same period, whereby more stereoscopic 3D image may be displayed. In other words, reality of the 3D image may be increased.

Control of the divided interval of the left eye image and the right eye image according to the steps S110 and S120 will be described in detail with reference to FIG. 6 and FIG. 7.

FIG. 6 is a diagram illustrating an operation for controlling a divided interval at steps S110 and S120 of FIG. 4.

FIG. 7 is another diagram illustrating an operation for controlling a divided interval at steps S110 and S120 of FIG. 4.

Referring to (a) of FIG. 6, any one (for example, left eye image) 610 of the left eye image and the right eye image included in the 3D image signal is divided into a plurality of images in a vertical direction, and the interval (vertical width, G11 or G12) of the respective divided images is controlled non-linearly.

Referring to (a) of FIG. 6, the step S110 may include non-linearly controlling each divided interval of the plurality of divided images so that the width of the divided interval is reduced towards both sides based on a predetermined axis 611 of one image. In other words, the divided intervals (G11 or G12) of the respective divided images are controlled differently from each other. The vertical axis in one image has been shown as an example of the predetermined axis. Also, if one image is divided in a horizontal direction, the predetermined axis may be the horizontal axis.

Also, referring to (b) of FIG. 6, in a left eye image which is shown in (a) of FIG. 6 and is one image and a right eye image 630 which forms one stereoscopic image and is the other image, the divided intervals are not controlled differently from each other. In other words, the image 630 is divided into a plurality of images as shown in (b) of FIG. 6 equally, and the divided intervals G21 or G22 are equally controlled (linearly).

Also, the step S120 may include outputting the image 630, which is the other image, through scaling to have the same size, the same resolution or the same aspect ratio as that of the left image 710 without linear control of the divided intervals. Since the equivalent control of the divided intervals is the same as enlargement or reduction of the image in one direction (for example, horizontal direction), the image is output through scaling only.

Also, the image processing method according to one embodiment of the present invention may further include outputting the left eye image (one image) and the right eye image (other image), of which divided intervals are controlled linearly or non-linearly, by scaling at the same size, the same resolution or the same aspect ratio. Also, the scaling operation may be performed by the scaler 340.

As shown in (a) of FIG. 6, if the divided intervals of the plurality of divided images are controlled non-linearly so that the width of the divided intervals is reduced towards both sides based on the predetermined axis 611 of the image 610 and the divided intervals of the other image 630 are controlled linearly (equally), binocular parallax between the left eye image and the right eye image is reduced towards both sides based on the predetermined axis 611. As a result, 3D image effect produced in a convex mirror is generated.

In more detail, the image is displayed in an area close to the predetermined axis 611 as a screen of short distance and in an area far away from the predetermined axis 611 as a screen of long distance. Accordingly, the stereoscopic effect in the 3D image may be more increased, whereby picture quality of the 3D image may be improved.

Also, if the divided interval of the respective divided images is increased, it may have an effect as if the corresponding divided image is oriented forwards (towards a viewer) or is displayed at short distance. Also, if the divided interval of the respective divided images is reduced, it may have an effect as if the corresponding divided image is oriented backwards (opposite to a viewer) or is displayed at long distance.

Referring to (a) of FIG. 7, any one (for example, left eye image) 710 of the left eye image and the right eye image included in the 3D image signal is divided into a plurality of images in a vertical direction, and the interval (vertical width, G31 or G32) of the divided images is controlled non-linearly.

Referring to (a) of FIG. 7, the step S110 may include non-linearly controlling the respective divided intervals (G31, G32) of the plurality of divided images so that the width of the divided interval is increased towards both sides based on a predetermined axis 711 of one image. In other words, the divided intervals (G31 or G22) of the respective divided images are controlled differently from each other. The vertical axis in one image has been shown as an example of the predetermined axis.

Also, since (b) of FIG. 7 is the same as (b) of FIG. 6, its detailed description will be omitted.

As shown in (a) of FIG. 7, the divided intervals of the plurality of divided images are controlled non-linearly so that the width of the divided intervals is increased towards both sides based on the predetermined axis 711 of the image 710, that is, towards a long distance from the predetermined axis 711, and the divided intervals of the other image 730 are controlled linearly (equally). In this case, the binocular parallax between the left eye image and the right eye image is increased towards both sides based on the predetermined axis 711. As a result, 3D image effect produced in a concave mirror is generated.

In more detail, the image is displayed in an area close to the predetermined axis 711 as a screen of long distance and in an area far away from the predetermined axis 711 as a screen of short distance. Accordingly, the stereoscopic effect in the 3D image may be more increased, whereby picture quality of the 3D image may be improved.

The predetermined axis 611 or 711 shown and described in FIG. 6 and FIG. 7 may be located differently depending on the configuration of the displayed screen. For example, the predetermined axis 611 or 711 may be located at an area of the screen configuration having short distance or long distance on the same screen.

The image processing method according to one embodiment of the present invention includes a step S130 of outputting one image and the other image. The operation at the step S130 may be performed by the scaler 340, and the one image and the other image which are output may be transmitted from the formatter 350.

Also, the image processing method according to one embodiment of the present invention may further include a step (not shown) of outputting one image at the step S110 and the other image at the step S120 as the 3D images by converting the images in accordance with the display format of the image display device 300. This operation may be performed by the formatter 350.

Also, the image processing method according to one embodiment of the present invention may further include a step (not shown) of displaying the one image and the other image, which are format converted, as the 3D images. This operation may be performed by the formatter 350.

Also, in the image processing method according to one embodiment of the present invention, the operation of each step may be controlled by the controller 360.

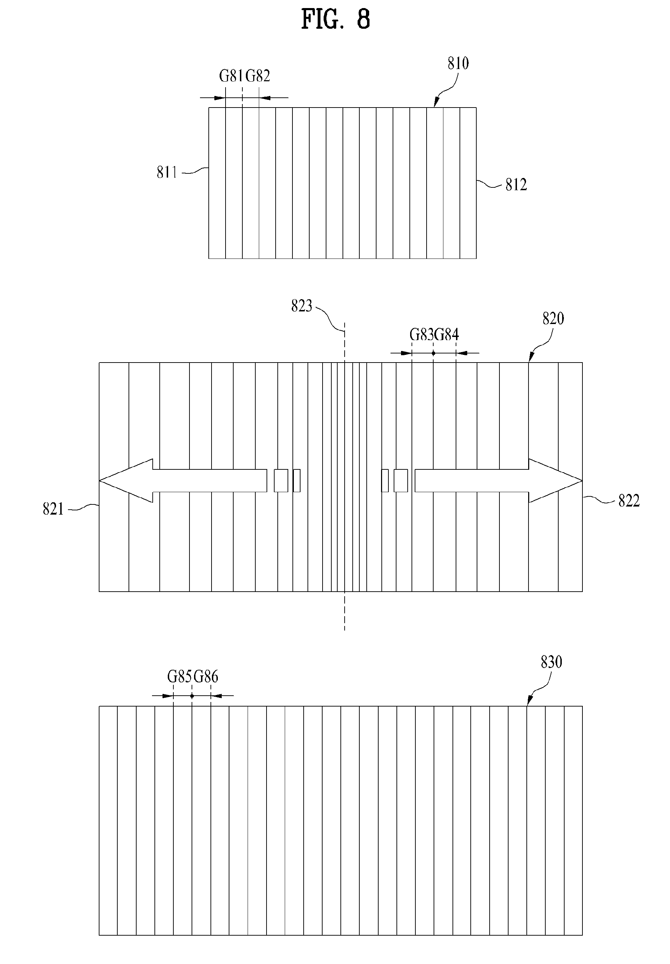

FIG. 8 is a diagram illustrating scaling in a horizontal direction.

Referring to FIG. 8, the scaler 340 may generate first image data 820 and second image data 830 by using image data 810. The scaler 340 may generate the first image data 820 by scaling the image data 810 so that scaling size may be increased towards the left side 811 and the right side 812 from the center of the image data 810. The scaler 340 may generate the first image data 820 by dividing the image data 810 into a plurality of divided images in a vertical direction and scaling each of the divided images to increase widths G81 and G82 of the divided intervals towards the left side 811 and the right side 812 from the center. If the first image data 820 are oriented towards the left side 821 or the right side 822 from the center 823, the width of the divided interval of the divided images is increased. In other words, the width G84 may be greater than the width G83.

According to one embodiment of the present invention, the scaler 340 may generate the first image data 820 by scaling the image data 810 so that scaling size may be reduced towards the left side 811 and the right side 812 from the center of the image data 810. The scaler 340 may generate the first image data 820 by dividing the image data 810 into a plurality of divided images in a vertical direction and scaling each of the divided images to reduce widths G81 and G82 of the divided intervals towards the left side 811 and the right side 812 from the center.

The scaler 340 may generate the second image data 830 by linearly scaling the image data 810. The scaler 340 may generate the second image data 830 by linearly scaling the divided intervals of the image data 810. In the second image data 830, widths G85 and G86 of the divided intervals of the divided images are the same as each other.

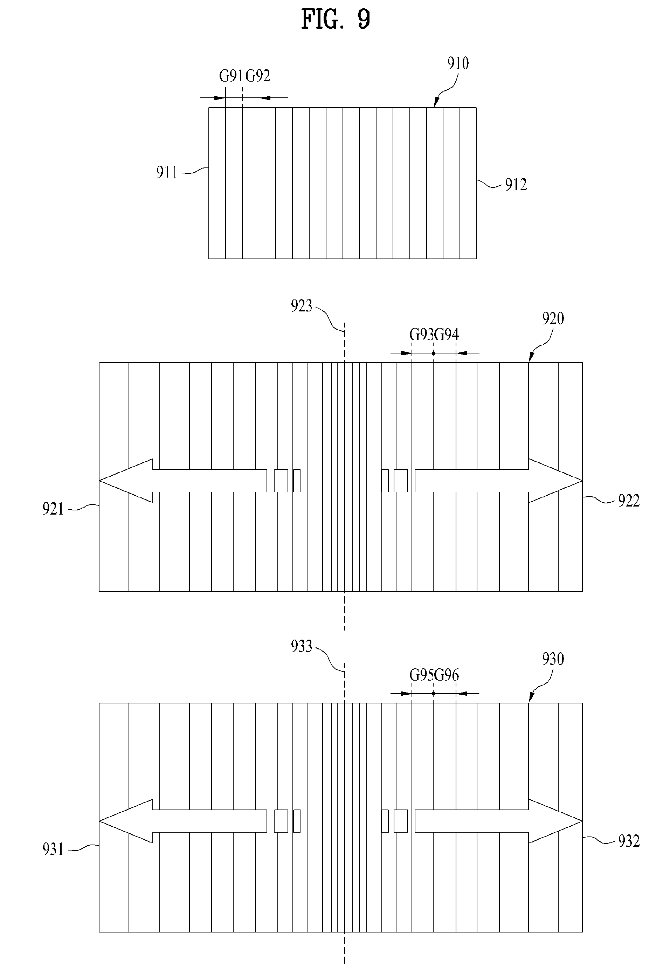

FIG. 9 is another diagram illustrating scaling in a horizontal direction.

The scaler 340 may generate first image data 920 and second image data 930 by using image data 910. The scaler 340 may generate the first image data 920 by scaling the image data 910 so that scaling size may be increased towards the left side 911 and the right side 912 from the center of the image data 910. The scaler 340 may generate the first image data 920 by dividing the image data 910 into a plurality of divided images in a vertical direction and scaling each of the divided images to increase widths G91 and G92 of the divided intervals towards the left side 911 and the right side 912 from the center. If the first image data 920 are oriented towards the left side 921 or the right side 922 from the center 923, the width of the divided interval of the divided images is increased. In other words, the width G94 may be greater than the width G93.

The scaler 340 may generate the second image data 930 by scaling the image data 910 so that scaling size may be increased towards the left side 911 and the right side 912 from the center of the image data 910. In this case, the scaler 340 increases the scaling size differently from that in generating the first image data 920. The scaler 340 may generate the second image data 930 by dividing the image data 910 into a plurality of divided images in a vertical direction and scaling each of the divided images to increase widths G91 and G92 of the divided intervals towards the left side 911 and the right side 912 from the center. If the second image data 930 are oriented towards the left side 931 or the right side 932 from the center 933, the width of the divided interval of the divided images is increased. In other words, the width G96 may be greater than the width G95. Also, the widths G95 and G96 are different from the widths G93 and G94, respectively.

According to one embodiment of the present invention, the scaler 340 may generate the first image data 920 and the second image data 930 by scaling the image data 910 so that scaling size may be reduced towards the left side 911 and the right side 912 from the center of the image data 910. In this case, the scaler 340 may reduce the scaling size of the second image data 930 differently from that of the first image data 920. The scaler 340 may generate the first image data 920 and the second image data 930 by dividing the image data 910 into a plurality of divided images in a vertical direction and scaling each of the divided images to reduce widths G91 and G92 of the divided intervals towards the left side 911 and the right side 912 from the center. In this case, the widths G95 and G96 are different from the widths G93 and G94, respectively.

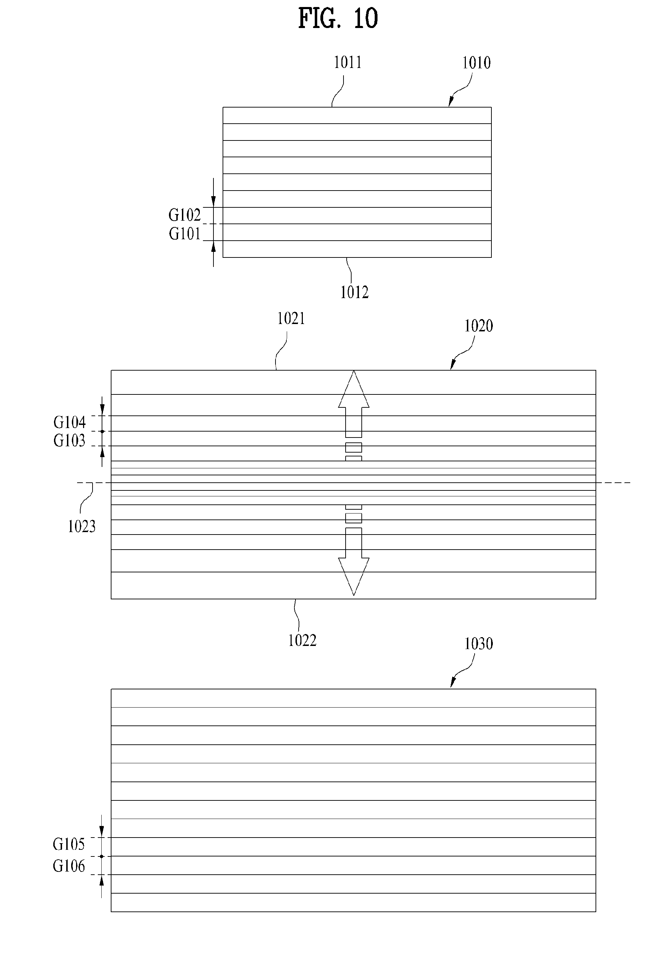

FIG. 10 is a diagram illustrating scaling in a vertical direction.

Referring to FIG. 10, the scaler 340 may generate first image data 1020 and second image data 1030 by using image data 1010. The scaler 340 may generate the first image data 1020 by scaling the image data 1010 so that scaling size may be increased towards the upper side 1011 and the lower side 1012 from the center of the image data 1010. The scaler 340 may generate the first image data 1020 by dividing the image data 1010 into a plurality of divided images in a horizontal direction and scaling each of the divided images to increase widths G101 and G102 of the divided intervals towards the upper side 1011 and the lower side 1012 from the center. If the first image data 1020 are oriented towards the upper side 1021 or the lower side 1022 from the center 1023, the width of the divided interval of the divided images is increased. In other words, the width G104 may be greater than the width G103.

According to one embodiment of the present invention, the scaler 340 may generate the first image data 1020 by scaling the image data 1010 so that scaling size may be reduced towards the upper side 1011 and the right side 1012 from the center of the image data 1010. The scaler 340 may generate the first image data 1020 by dividing the image data 1010 into a plurality of divided images in a horizontal direction and scaling each of the divided images to reduce the widths G101 and G102 of the divided intervals towards the upper side 1011 and the right side 1012 from the center.

The scaler 340 may generate the second image data 1030 by linearly scaling the image data 1010. The scaler 340 may generate the second image data 1030 by linearly scaling the divided intervals of the image data 1010. In the second image data 1030, widths G105 and G106 of the divided intervals of the divided images are the same as each other.

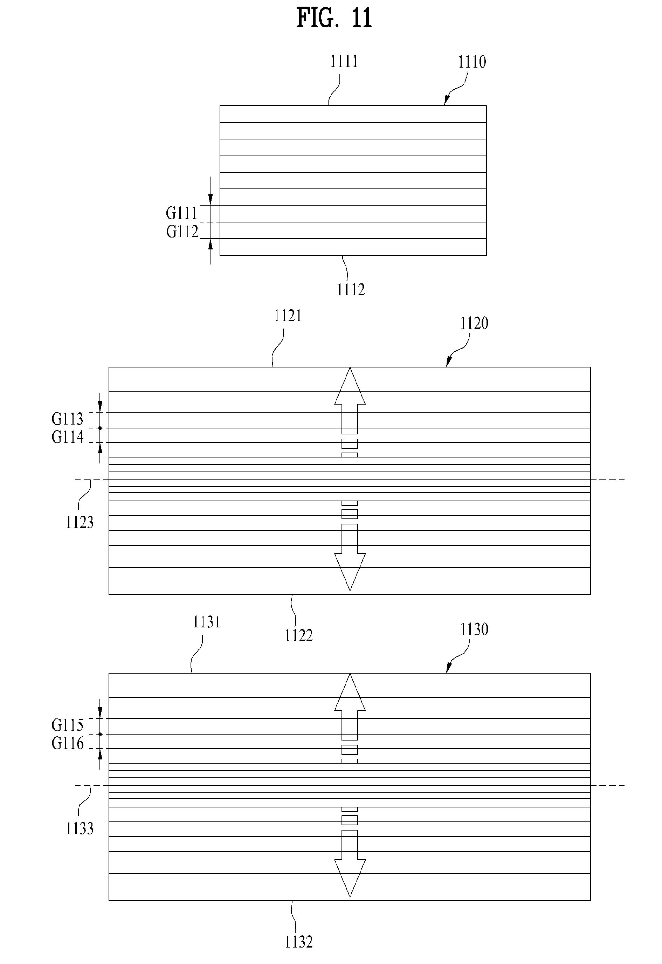

FIG. 11 is another diagram illustrating scaling in a vertical direction.

Referring to FIG. 11, the scaler 340 may generate first image data 1120 and second image data 1130 by using image data 1110. The scaler 340 may generate the first image data 1120 by scaling the image data 1110 so that scaling size may be increased towards the upper side 1111 and the lower side 1112 from the center of the image data 1110. The scaler 340 may generate the first image data 1120 by dividing the image data 1110 into a plurality of divided images in a horizontal direction and scaling each of the divided images to increase widths G111 and G112 of the divided intervals towards the upper side 1111 and the lower side 1112 from the center. If the first image data 1120 are oriented towards the upper side 1121 or the lower side 1122 from the center 1123, the width of the divided interval of the divided images is increased. In other words, the width G113 may be greater than the width G114.

The scaler 340 may generate the second image data 1130 by scaling the image data 1110 so that scaling size may be increased towards the upper side 1111 and the lower side 1112 from the center of the image data 1110. In this case, the scaler 340 increases the scaling size differently from that in generating the first image data 1120. The scaler 340 may generate the second image data 1130 by dividing the image data 1110 into a plurality of divided images in a vertical direction and scaling each of the divided images to increase widths G111 and G112 of the divided intervals towards the upper side 1111 and the lower side 1112 from the center. If the second image data 1130 are oriented towards the upper side 1131 or the lower side 1132 from the center 1133, the width of the divided interval of the divided images is increased. In other words, the width G115 may be greater than the width G116. Also, the widths G115 and G116 are different from the widths G113 and G114, respectively.

According to one embodiment of the present invention, the scaler 340 may generate the first image data 1120 and the second image data 1130 by scaling the image data 1110 so that scaling size may be reduced towards the upper side 1111 and the lower side 1112 from the center of the image data 1110. In this case, the scaler 340 may reduce the scaling size of the second image data 1130 differently from that of the first image data 1120. The scaler 340 may generate the first image data 1120 and the second image data 1130 by dividing the image data 1110 into a plurality of divided images in a vertical direction and scaling each of the divided images to reduce the widths G111 and G112 of the divided intervals towards the upper side 1111 and the lower side 1112 from the center. In this case, the widths G115 and G116 are different from the widths G113 and G114, respectively.

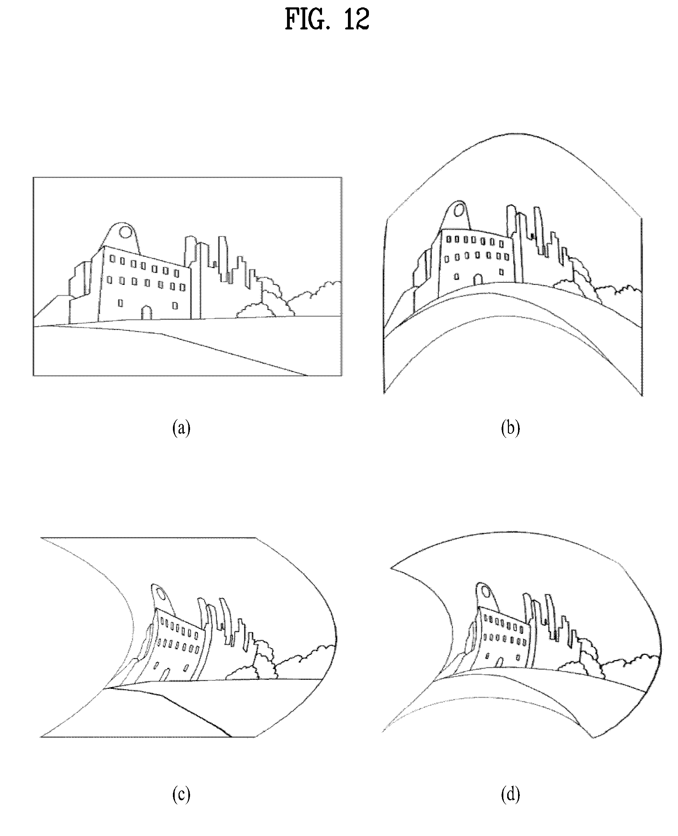

FIG. 12 is a diagram illustrating a screen where contents are displayed.

FIG. 12(a) illustrates that a display unit 370 displays image data. In this case, the image data may be one of 2D image data and 3D image data.

FIG. 12(b) illustrates that first image data and second image data, which are scaled from the image data displayed in FIG. 12(a) in the manners described in FIG. 8 or FIG. 9, are displayed. Since the image interval in the first image data and the second image data becomes wide towards the left side and the right side from the center, the image is displayed on the center of the screen at long distance and is displayed towards the left side and the right side of the screen at short distance. Accordingly, the image of FIG. 12(b) seems to be displayed as if the image of FIG. 12(a) is displayed on a screen curved in a horizontal direction. As a result, according to the present invention, the user's concentration and interest in the displayed image may be increased. In this case, if the image data are the 3D image data, the first image data may be scaled from one of the left eye image and the right eye image of the 3D image data, and the second image data may be scaled from the other one.

FIG. 12(c) illustrates that first image data and second image data, which are scaled from the image data displayed in FIG. 12(a) in accordance with the manners described in FIG. 10 or FIG. 11, are displayed. Since the image interval in the first image data and the second image data becomes wide towards the upper side and the lower side from the center, the image is displayed on the center of the screen at long distance and is displayed towards the upper side and the lower side of the screen at short distance. Accordingly, the image of FIG. 12(c) seems to be displayed as if the image of FIG. 12(a) is displayed on a screen curved in a vertical direction. As a result, according to the present invention, the user's concentration and interest in the displayed image may be increased. In this case, if the image data are the 3D image data, the first image data may be scaled from one of the left eye image and the right eye image of the 3D image data, and the second image data may be scaled from the other one.

FIG. 12(d) illustrates that first image data and second image data, which are scaled from the image data displayed in FIG. 12(a) in accordance with one of the manners described in FIG. 8 or FIG. 9 and one of the manner described in FIG. 10 or FIG. 11, are displayed. Since the image interval in the first image data and the second image data becomes wide towards the left side and the right side from the center, the image is displayed on the center of the screen at long distance and is displayed towards the left side and the right side of the screen at short distance. Also, since the image interval in the first image data and the second image data becomes wide towards the upper side and the lower side from the center, the image is displayed on the center of the screen at long distance and is displayed towards the upper side and the lower side of the screen at short distance. Accordingly, the image of FIG. 12(d) seems to be displayed as if the image of FIG. 12(a) is displayed on a screen curved in a horizontal direction and a vertical direction. In other words, the image of FIG. 12(d) seems to be displayed as if the image of FIG. 12(a) is displayed on a sphere type screen. As a result, according to the present invention, the user's concentration and interest in the displayed image may be increased. In this case, if the image data are the 3D image data, the first image data may be scaled from one of the left eye image and the right eye image of the 3D image data, and the second image data may be scaled from the other one.

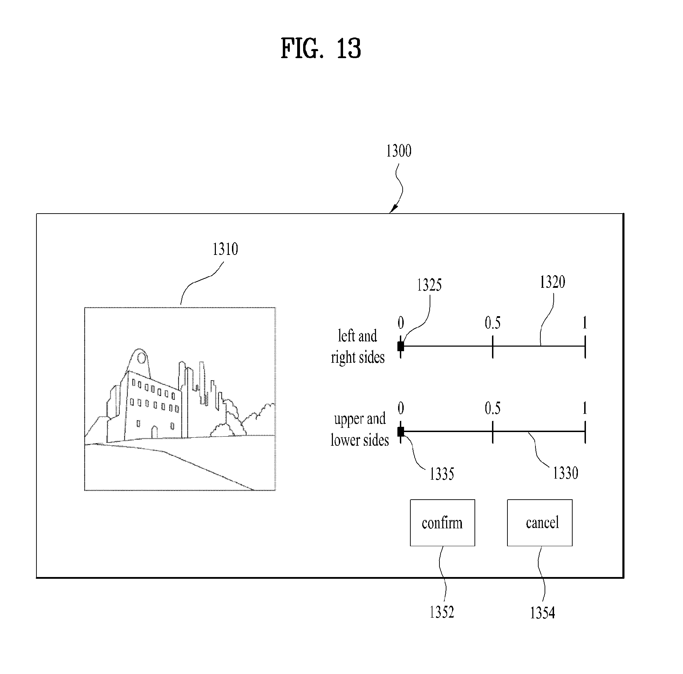

FIG. 13 to FIG. 16 are diagrams illustrating that a graphical user interface (GUI) for setting a scaling mode is displayed.

The user interface unit 390 receives the user's manipulation for requesting setting of the scaling mode, and the controller 360 senses the received user's manipulation. The controller 360 controls the GUI for setting the scaling mode in response to the user's manipulation, so that the GUI may be displayed.

Referring to FIG. 13, the display unit 370 may display a GUI 1300 for setting the scaling mode, on the screen.

The GUI 1300 may include an image display area 1310 displaying images, a first bar 1320 for setting a horizontal scaling parameter indicating a scaling mode in a horizontal direction, a second bar 1330 for setting a vertical scaling parameter indicating a scaling mode in a vertical direction, a confirm button 1352 and a cancel button 1354.

The image display area 1310 displays the scaled image on the basis of the horizontal scaling parameter rand the vertical scaling parameter, which are set through the first bar 1320 and the second bar 1330.

The user may select a value indicated by a point where a scale selection mark 1325 of the first bar 1320 is located, by controlling the position of the scale selection mark 1325.

The user may select a value indicated by a point where a scale selection mark 1335 of the second bar 1330 is located, by controlling the position of the scale selection mark 1335.

If the controller 360 senses the user's manipulation selecting the confirm button 1352, in response to the user's manipulation, it sets the value indicated by the point where the scale selection mark 1325 is located, as the horizontal scaling parameter, and sets the value indicated by the point where the scale selection mark 1335 is located, as the vertical scaling parameter.

The controller 360 may control the scaler 340 to scale the image data in accordance with the horizontal scaling parameter and the vertical scaling parameter. In this case, increase or reduction of a scaling size to the left side or the right side from the center described in FIG. 8 or FIG. 9 is changed in accordance with the horizontal scaling parameter. Also, if the horizontal scaling parameter is close to 1, the image display area 1310 seems like the screen tilted towards the horizontal direction. If the horizontal scaling parameter is close to 0, the image display area 1310 seems like the screen close to a plane. Also, increase or reduction of a scaling size to the upper side or the lower side from the center described in FIG. 10 or FIG. 11 is changed in accordance with the vertical scaling parameter. Also, if the vertical scaling parameter is close to 1, the image display area 1310 seems like the screen tilted towards the vertical direction. If the horizontal scaling parameter is close to 0, the image display area 1310 seems like the screen close to a plane.

In FIG. 13, since the scale selection mark 1325 and the scale selection mark 1335 are located at the point where a scale is set to 0, both the horizontal scaling parameter and the vertical scaling parameter are set to 0. If the image data are 2D image data, the image data may be scaled to one image data having the same divided intervals. If the image data are 3D image data, the left eye image data and the right eye image data are scaled in the same manner. The image display area 1310 seems like a plane screen.

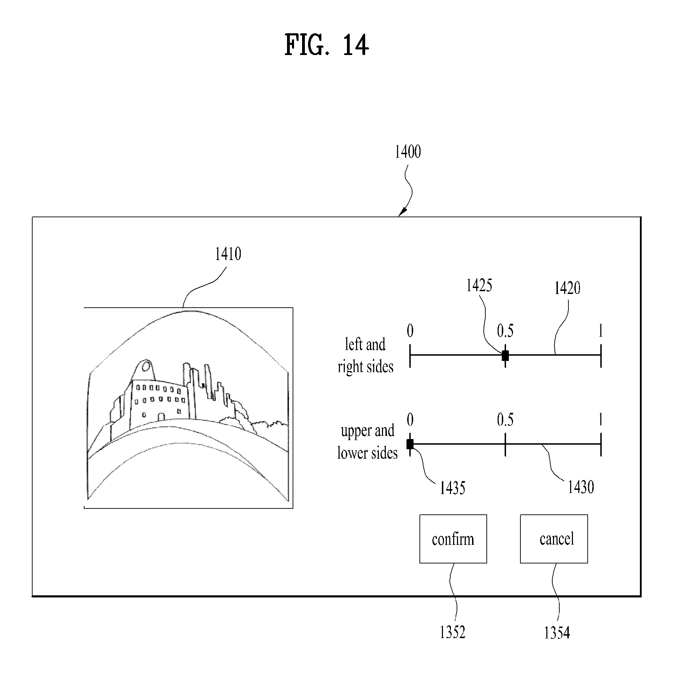

In a GUI 1400 of FIG. 14, since a scale selection mark 1425 is located at a point where a scale of a first bar 1420 is set to 0.5, the horizontal scaling parameter is set to 0.5. Since a scale selection mark 1435 is located at a point where a scale of a second bar 1430 is set to 0, the vertical scaling parameter is set to 0. If the image data are 2D image data, the image data may be scaled to the first image data and the second image data described in FIG. 8 or FIG. 9. If the image data are 3D image data, one of the left eye image data and the right eye image data may be scaled to the first image data described in FIG. 8 or FIG. 9, and the other one may be scaled to the second image data described in FIG. 8 or FIG. 9. In this case, the increased amount or the reduced amount of a scaling size towards the left side and the right side from the center of the image data may be determined on the basis of 0.5 which is the value of the horizontal scaling parameter. Also, the image display area 1410 displays the image scaled in accordance with the horizontal scaling parameter of 0.5 and the horizontal scaling parameter of 0. The image display area 1410 seems like a screen tilted in a horizontal direction.

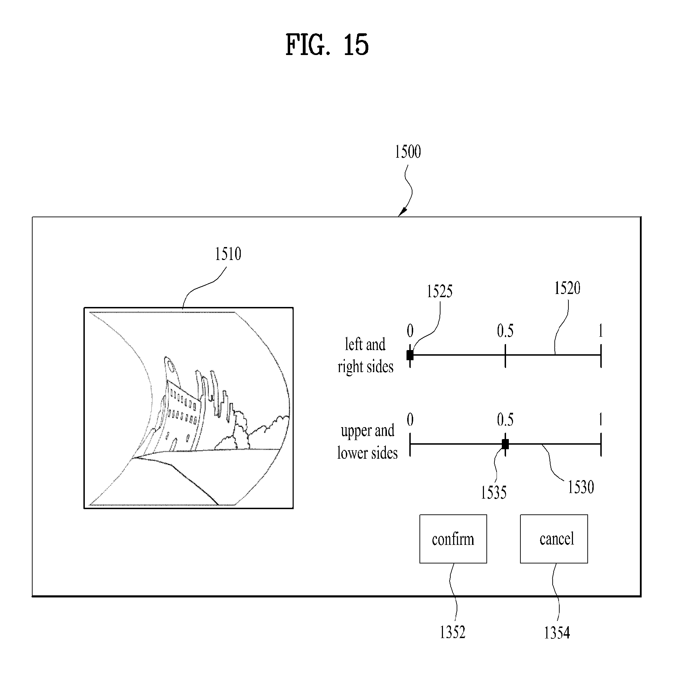

In a GUI 1500 of FIG. 15, since a scale selection mark 1535 is located at a point where a scale of a second bar 1530 is set to 0.5, the vertical scaling parameter is set to 0.5. Since a scale selection mark 1525 is located at a point where a scale of a first bar 1520 is set to 0, the horizontal scaling parameter is set to 0. If the image data are 2D image data, the image data may be scaled to the first image data and the second image data described in FIG. 10 or FIG. 11. If the image data are 3D image data, one of the left eye image data and the right eye image data may be scaled to the first image data described in FIG. 10 or FIG. 11, and the other one may be scaled to the second image data described in FIG. 10 or FIG. 11. In this case, the increased amount or the reduced amount of a scaling size towards the upper side and the lower side from the center of the image data may be determined on the basis of 0.5 which is the value of the vertical scaling parameter. Also, an image display area 1510 displays the image scaled in accordance with the horizontal scaling parameter of 0 and the vertical scaling parameter of 0.5. The image display area 1510 seems like a screen tilted in a vertical direction.

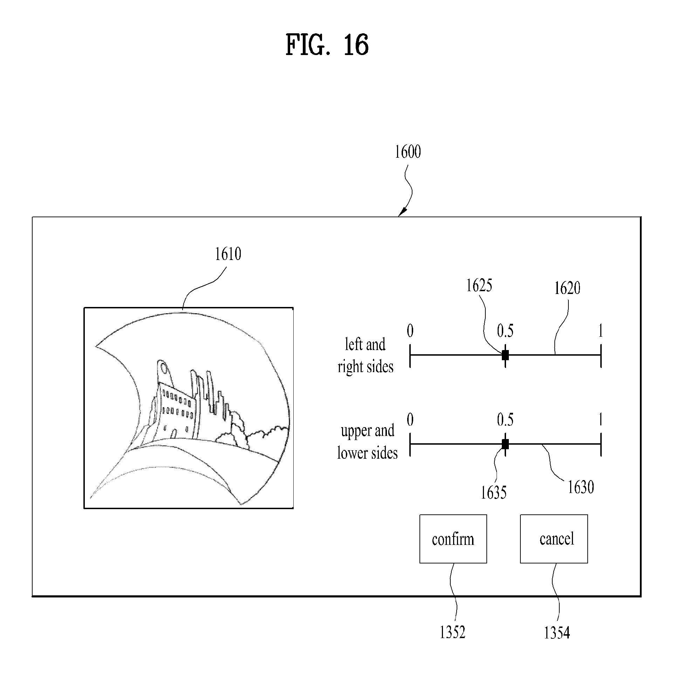

In a GUI 1600 of FIG. 16, since a scale selection mark 1625 is located at a point where a scale of a first bar 1620 is set to 0.5, the horizontal scaling parameter is set to 0.5. Since a scale selection mark 1635 is located at a point where a scale of a second bar 1630 is set to 0.5, the vertical scaling parameter is set to 0.5. If the image data are 2D image data, the image data may be scaled to one of the manners described in FIG. 8 or FIG. 9 and one of the manners described in FIG. 10 or FIG. 11. If the image data are 3D image data, one of the left eye image data and the right eye image data may be scaled in accordance with a hybrid manner of one of the scaling manners to the first image data described in FIG. 8 or FIG. 9 and one of the scaling manners to the first image data described in FIG. 10 or FIG. 11. In this case, the increased amount or the reduced amount of a scaling size towards the left side and the right side from the center of the image data may be determined on the basis of 0.5 which is the value of the horizontal scaling parameter. Also, the increased amount or the reduced amount of a scaling size towards the upper side and the lower side from the center of the image data may be determined on the basis of 0.5 which is the value of the vertical scaling parameter. Also, the image display area 1610 displays the image scaled in accordance with the horizontal scaling parameter of 0.5 and the vertical scaling parameter of 0.5. The image display area 1610 seems like a screen tilted in a horizontal direction and a vertical direction.

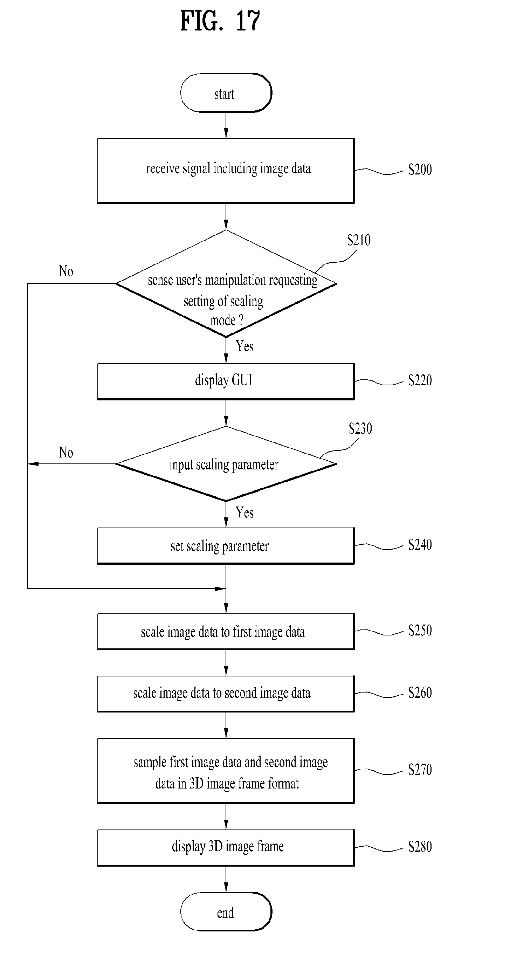

FIG. 17 is a flow chart illustrating an image processing method according to another embodiment of the present invention.

Referring to FIG. 17, the signal input unit 310 receives, which includes image data (S200). In this case, the image data may include at least one of the 2D image data and the 3D image data.

The controller 360 identifies whether the user's manipulation requesting setting of a scaling mode has been sensed (S210).

In response to the user's manipulation, the controller 360 controls the GUI for setting the scaling mode, so that the GUI may be displayed (S220). In this case, the displayed GUI may be the GUI 1300 shown in FIG. 13.

The controller 360 identifies whether the scaling parameter has been input (S230). In this case, the scaling parameter may include at least one of the horizontal scaling parameter and the vertical scaling parameter.

If the scaling parameter is input, the controller 360 sets the input scaling parameter as the scaling parameter (S240).

The scaler 340 scales the image data to the first image data (S250). The first image data may be scaled in accordance with the manners described in FIG. 8 or FIG. 9, may be scaled in accordance with the manners described in FIG. 10 or FIG. 11, or may be scaled in accordance with a hybrid manner of one of the manners described in FIG. 8 or FIG. 9 and one of the manners described in FIG. 10 or FIG. 11. If the image data are 3D image data, the first image data may be scaled from one of the left eye image data and the right eye image data. Also, the scaler 340 scales the image data to the first image data in accordance with the scaling parameter set at the step S240. In other words, the scaler 340 scales the first image data in accordance with the manner indicated by the scaling parameter.

The scaler 340 scales the image data to the second image data (S260). The second image data may be scaled in accordance with the manners described in FIG. 8 or FIG. 9, may be scaled in accordance with the manners described in FIG. 10 or FIG. 11, or may be scaled in accordance with a hybrid manner of one of the manners described in FIG. 8 or FIG. 9 and one of the manners described in FIG. 10 or FIG. 11. If the image data are 3D image data, the second image data may be scaled from the other one of the left eye image data and the right eye image data. Also, the scaler 340 scales the image data to the second image data in accordance with the scaling parameter set at the step S240. In other words, the scaler 340 scales the second image data in accordance with the manner indicated by the scaling parameter.

The formatter 350 samples the first image data and the second image data in accordance with a 3D image frame format (S270). In this case, the 3D image frame format is the format for displaying 3D image through the display unit 370.

The display unit 370 displays the 3D image frame output from the formatter 350 (S280). In this case, the 3D image frame may be displayed in accordance with a glasses mode and a non-glasses mode.

In the meantime, the terminologies used in the present invention are defined considering their functions in the present invention. Since the terminologies may be modified depending on intention of a person skilled in the art, or practices, the terminologies should be defined on the basis of the detailed meanings of which are described in relevant parts of the description herein.

It will be apparent to those skilled in the art that the present invention can be embodied in other specific forms without departing from the spirit and essential characteristics of the invention. Thus, the above embodiments are to be considered in all respects as illustrative and not restrictive. The scope of the invention should be determined by reasonable interpretation of the appended claims and all change which comes within the equivalent scope of the invention are included in the scope of the invention.

### INDUSTRIAL APPLICABILITY

The present invention relates to the image processing technology, and may be used for development and usage of an image processing device in the field of image industries.

## Claims

1. An image processing method comprising the steps of:
receiving image data;
scaling the received image data to first image data; and
scaling the received image data to second image data,
wherein the first image data and the second image data are scaled to be different from each other.

2. The image processing method according to claim 1, wherein the received image data include either 2D image data or 3D image data.

3. The image processing method according to claim 1, wherein the first image data are obtained by differently scaling divided intervals of the received image data, and the second image data are obtained by equally scaling divided intervals of the received image data.

4. The image processing method according to claim 3, wherein the divided intervals are divided in either a vertical direction or a horizontal direction.

5. The image processing method according to claim 1, wherein either the first image data or the second image data are scaled such that a scaling size is increased or reduced towards at least one of a left and right direction and an up and down direction from the center of the received image data.

6. The image processing method according to claim 1, wherein either the first image data or the second image data are scaled such that a scaling size is increased or reduced towards the center from at least one of a left side, a right side, an upper side, and a lower side of the received image data.

7. The image processing method according to claim 5 or 6, wherein increase or reduction of the scaling size for the first image data is different from increase or reduction of the scaling size for the second image data.

8. The image processing method according to claim 1, wherein the first image data and the second image data have the same size, the same resolution or the same aspect ratio.

9. The image processing method according to claim 1, wherein the received image data are 3D image data, which include left eye image data and right eye image data, the first image data are scaled from one of the left eye image data and the right eye image data, and the second image data are scaled from the other one.

10. The image processing method according to claim 1, further comprising the step of sampling the first image data and the second image data in accordance with a 3D image frame format.

11. The image processing method according to claim 1, further comprising the steps of sensing a user's manipulation requesting setting of a scaling mode, controlling a GUI for setting a scaling mode, in response to the sensed user's manipulation, so that the GUI may be displayed, and receiving a scaling parameter through the GUI, wherein the received image data are scaled to the first image data and the second image data in accordance with the input scaling parameter.

12. The image processing method according to claim 11, wherein the GUI includes an area displaying the first image data and the second image data, which are scaled in accordance with the scaling parameter.

13. An image display device comprising:
a signal input unit receiving image data; and
a signal processor scaling the received image data to first image data and second image data,
wherein the first image data and the second image data are scaled to be different from each other.

14. The image display device according to claim 13, wherein the signal processor includes:
a decoder decoding the receive image data;
a first scaler scaling the decoded image data to the first image data;
a second scaler scaling the decoded image data to the second image data; and
a formatter sampling the first image data and the second image data in accordance with a 3D image frame format.

15. The image display device according to claim 13, further comprising an interface unit receiving a user's manipulation requesting setting of a scaling mode, wherein the controller controls a GUI for setting a scaling mode, in response to the user's manipulation, so that the GUI may be displayed, and controls the received image data to be scaled to the first image data and the second image data in accordance with a scaling parameter input through the GUI.

16. The image display device according to claim 15, wherein the signal processor scales the received image data or stored image data to the first image data and the second image data in accordance with the scaling parameter, and the GUI includes an area displaying the first image data and the second image data, which are scaled.

17. The image display device according to claim 13, wherein the signal input unit includes at least one of a tuner receiving RF signal, which includes the image data, a wire network interface unit receiving IP packets, which include the image data, a RF signal input unit receiving the IP packets, and an audio/video (AN) input unit receiving the image data from an external unit.

18. An image processing method comprising the steps of:
receiving image data;
scaling the received image data to first image data;
scaling the received image data to second image data; and
displaying the first image data and the second image data, which are scaled,
wherein the first image data and the second image data are scaled to be different from each other.

19. The image processing method according to claim 18, wherein the displaying step includes displaying the first image data and the second image data in accordance with a 3D display mode.

20. The image processing method according to claim 18, further comprising the steps of:
sensing a user's manipulation requesting setting of a scaling mode;
displaying a GUI for setting a scaling mode, in response to the sensed user's manipulation; and
receiving a scaling parameter through the displayed GUI,
wherein the received image data are scaled to the first image data and the second image data in accordance with the received parameter.
